# EUROPEAN PATENT APPLICATION

(11) **EP 0 634 844 A1**
(43) Date of publication of application: **18.01.1995**
(21) Application number: 94304974.2
(22) Date of filing: 06.07.1994
(51) Int. Cl.: H04B 10/135, G02B 6/42

(54) **Non-reciprocal optical diplexer**

(30) Priority: 15.07.1993 US 92047
(71) Applicant: AT&T Corp., New York, NY 10013-2412 (US)
(72) Inventor: Bergmann, Ernest Eisenhardt, Bethlehem, Pennsylvania 18015 (US)
(74) Representative: Watts, Christopher Malcolm Kelway, Dr.

(57) **Abstract**

An optical diplexer (25,27,29) is disclosed which significantly reduces the losses associated with conventional 3dB couplers. Basically, the diplexer comprises a standard in-line isolator (a pair of birefringent plates (27,29) separated by a Faraday rotator, (25)) which is modified to include a second, preferably polarization-specific, source such as a laser (55) at the output. The second source is positioned such that its output will pass through the isolator and re-enter the input fiber (45). For example, the second source (55) is located below the output fiber and angled upward to provide coupling into the device. A third source (53), e.g. of pumping radiation for an erbium-doped input fiber (45), may be included, positioned above the output fiber and tilted downward towards the device.

## Description

### Technical Field

The present invention relates to optical communication systems in general, and more particularly to optical diplexers.

### Background of the Invention

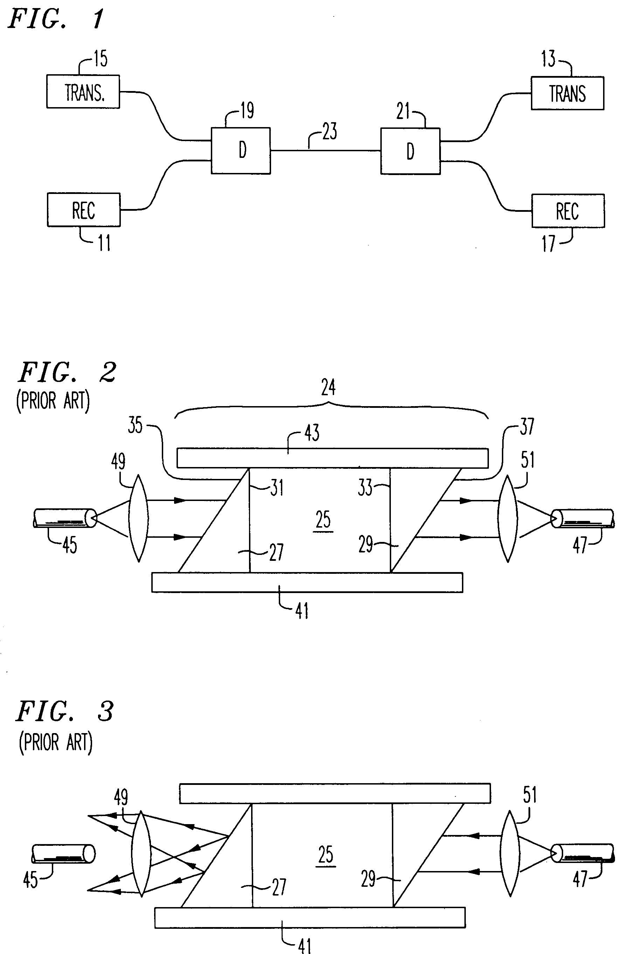

An example of a particular type of single-fiber optical communication system is shown in FIG. 1. During the operation of the system depicted in FIG. 1, it is desired that transmitter 13 send signals to receiver 11 while transmitter 15 sends signals or communicates with receiver 17. Simultaneous two-way communication via channel 23 (typically an optical fiber) is achieved through the use of two diplexers 19 and 21. The diplexers in current common use are usually 1×2 fiber couplers. While permitting simultaneous two-way communication in systems similar to that depicted in FIG. 1, ideal, symmetric 1×2 couplers extract a 3dB penalty. Consequently, the signal transmitted by transmitter 13 is reduced by a minimum of 6dB (in addition to transmission losses and other non-ideal losses) when received at receiver 11. Also, transmission from 15 to 17 suffers a 6dB minimum coupler loss as well.

Those concerned with the development of optical communication systems have consistently sought diplexers and other components with minimal signal attenuation. For example, U.S. patent 4,548,478 issued to Shirasaki discusses an optical isolator which exhibits reduced attenuation.

### Summary of the Invention

An isolator may be utilized to provide a diplexing function in the present invention which includes: an isolator providing polarization independent communication from a first point to a second point on opposite sides of the isolator and substantially attenuating communication from the second point to the first point.

A first fiber is positioned at the first point; and a second fiber is positioned at the second point; then a third fiber is positioned on the same side of the isolator as the second fiber and away from its optic axis, whereby light of a predetermined polarization emanating from the third fiber traverses the isolator and enters the first fiber.

### Brief Description of the Drawings

FIG. 1 is a diagram illustrating an optical communication system;
FIGS. 2, 3, 4 and 5 are diagrams showing an illustrative embodiment of the present invention.

### Detailed Description

FIG. 2 is a diagram depicting a prior art device 24 employed as an isolator. Reference numeral 25 denotes a Faraday rotator, illustratively an yttrium iron garnet (YIG) single crystal. Reference numerals 27 and 29 denote a matched pair of birefringent crystals, typically, TiO₂ (rutile) wedges. The length of the yttrium iron garnet crystal is chosen to provide a 45° non-reciprocal rotation of linear polarization for the designed wavelength of operation in the optical communication system. End faces 31 and 33 of rotator 25 may be coated with an anti-reflective coating as may be the corresponding mating surfaces of the rutile wedges 27 and 29. The beveled surfaces 35 and 37 may also be covered with an anti-reflective coating. Reference numerals 41 and 43 represent a magnet, typically samarium cobalt, which provides sufficient field to saturate rotator 25.

Birefringent wedges 27 and 29 are oriented such that their axes are at 45° with respect to each other. In the forward direction (i.e., toward the right of FIG. 2) the 45° polarization rotation is in a direction such that the ordinary and extraordinary rays retain their identity in both wedges.

In the reverse direction, because of the non-reciprocal polarization rotation of Faraday rotator 25, the extraordinary ray and the ordinary ray exchange identities in going from the first wedge 29 to the second wedge 27, i.e., the extraordinary ray becomes the ordinary ray and vice versa.

Thus, in FIG. 2, light emanating from fiber 45 and traversing lens 49 proceeds nevertheless on a parallel path through lens 51 into fiber 47. Alternatively, reference numeral 47 may denote a detector. However, in FIG. 3 light emanating from fiber 47 and traversing lens 51 passes through rutile 29, YIG 25, rutile 27, and lens 49 to be ultimately focused upon points A and B (and not enter fiber 45). Thus the device illustrated in FIGS. 2 and 3 provides for the transmission of light from fiber 45 to fiber 47 but does not permit the transmission of light from fiber 47 to fiber 45.

Generally speaking, the operation of the device depicted in FIGS. 2 and 3 is discussed in U.S. patent 4,548,478 issued to Shirasaki.

As will be described below, the device of FIGS. 2-3 may be adapted for use as a diplexer and an optical communication system may be based thereon.

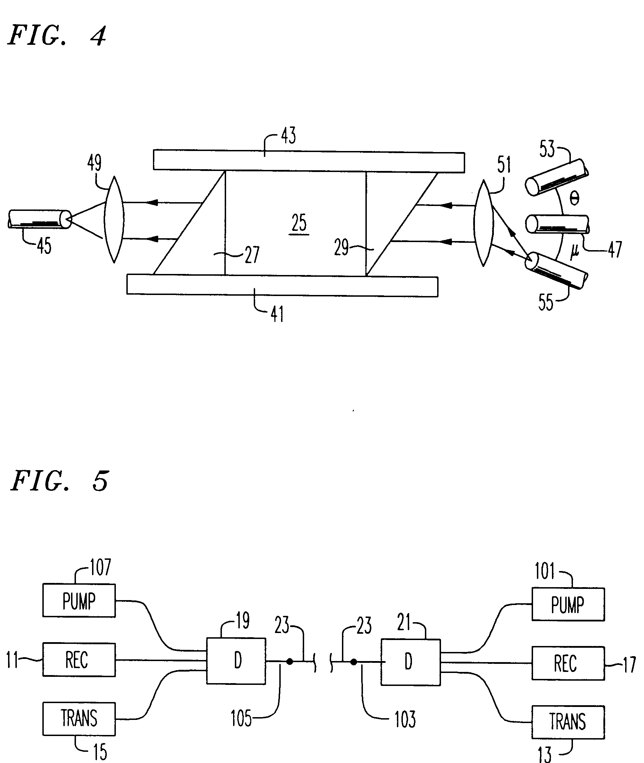

Turning to FIG. 4, it will be noted that additional fiber 55 or other light source has been positioned on the right side of the device depicted in FIG. 3. Light source 55 is displaced from fiber 47 by an angle µ. FIG. 4 illustrates that appropriately polarized light emanating from light source 55 will traverse lens 51 together with birefringent crystal 29, Faraday rotator 25, and birefringent crystal 27, and lens 49, being ultimately focused upon fiber or detector 45. Thus, provided the light emanating from light source 55 is appropriately polarized, communication through the combination of elements 25, 27, and 29 (ordinarily used as an isolator) is achieved in what is normally the reverse direction.

Furthermore, an additional fiber 53 (also displaced from the axial position of fiber 47 by an angle ϑ ) will also transmit light of a different polarization through the combination of elements 25, 27, and 29 to fiber 45. (Angles µ and ϑ are approximately equal.)

A two-way communication system of the type illustrated in FIG. 1 may be built using two diplexers such as that shown in FIG. 4.

Thus, for example, referring to FIGS. 1 and 4, elements 25, 27, 29, 49, and 51 in FIG. 4 correspond to diplexer 21 of FIG. 1. Fiber 45 corresponds to channel 23; fiber 47 may be connected to receiver 17, and fiber 55 may be connected to transmitter 13 (which generates light of an appropriate polarization).

Similarly, reference numeral 19 in FIG. 1 is another diplexer of the type shown in FIG. 4. As mentioned before, fiber 45 corresponds to the other end of channel 23 and transmitter 15, which generates at least some light of an appropriate polarization is connected to an off-axis fiber such as fiber 55, while receiver 11 is connected to an on-axis fiber such as fiber 47. (Light sources and detectors may be substituted for appropriate fiber ends.)

An additional benefit to use the device depicted in FIG. 4 in a two-way optical communication system is that signal reflections from receiver 17 (FIG. 1) are not coupled back to fiber 45 (FIG. 4). Similarly reflections from receiver 11 (FIG. 1) are not coupled backward. In some applications it may be desirable to add fiber 53 as a "spare" light source for fiber 55 in high reliability applications such as undersea cables.

The preceding discussion envisioned applications in which the wavelength used is the same or nearly the same for all light sources. If the wavelengths are significantly different, one should change the positions of the fibers 53,55 to compensate for the change in refraction in the prisms. It is also necessary to rotate the incident polarization because the Faraday rotation will no longer be 45°. If the wavelengths are significantly different, the design may be compromised to accommodate an average wavelength. It should also be noted that isolation performance with respect to receiver reflections may be degraded at wavelengths different from the original design because of the altered Faraday rotation. The altered Faraday rotation will also reduce suppression of reflections back into light sources for other wavelengths.

Another embodiment of the present invention, illustrated in FIG. 5, utilizes gain, such as from an erbium doped fiber amplification process to support operation over longer spans where transmission losses may be greater. In FIG. 5, diplexers 19 and 21 are similar to that described in FIG. 4. Each diplexer is equipped with an on-axis receiver (11,17) and an off-axis transmitter (15,13). In addition, each diplexer is equipped with a respective pump (107,101). For example, transmitter 15 may be appropriate for transmitting at 1.5 microns, and pump 2 may be a laser with a frequency of 1.48 microns. In addition, reference numerals 105 and 103 denote erbium doped fibers. Erbium doped fiber 105 is primarily pumped by pump 107. Analogously, erbium doped fiber 103 is primarily pumped by pump 101. The output of each pump 107, 101 is effectively the output to an isolator since light coming from transmission line 23 is destined for a receiver (e.g., 11). Comparatively little pump power, for example, from pump 107 reaches the receiver on the other side (i.e., receiver 17) because the pump is attenuated by erbium doped fiber 105, transmission line 23, and erbium doped fiber 103. However, the signal from transmitter 13 is amplified by the two erbium doped fibers so it will be large compared to "pump leakage." Similarly one has a large signal compared to "pump leakage" for the reverse communication direction.

If desired, the entire span of fiber connection (e.g., 105,23,103) may be made of single doped fiber or a combination of doped and undoped fiber sections.

## Claims

1. An optical communication system comprising:
at least a first isolator (25,27,29) providing polarization independent communication from a first point to a second point, said first and second points being on opposite sides of said isolator (25,27,29), said first and second points defining an optic axis through said isolator, said isolator (25,27,39) substantially attenuating communication from said second point to said first point;
a first fiber (45) having a first end positioned at said first point;
a receiving means (47) positioned at said second point; **AND CHARACTERIZED BY**
a light source (55) positioned on the same side of said isolator as said receiving means and away from said optic axis, whereby light of a predetermined polarization emanating from said light source traverses said isolator and enters said first fiber (45), and light having a polarization orthogonal to said predetermined polarization is substantially attenuated.

2. The system of claim 1 further including a second light source (53) positioned on the same side of said isolator (25,27,29) as said receiving means (47) and away from said optical axis, whereby light emanating from said second light source (53) traverses said isolator and enters said first fiber (45).

3. The system of claim 2 in which said first fiber (45) is erbium doped and in which said second light source (53) is a pump.

4. The system of any of the preceding claims in which said isolator (25,27,29) includes a Faraday rotator (25) having first and second opposed sides; and
first (27) and second (29) wedge-shaped plates of birefringent material, located at said respective first and second opposed sides.

5. The system of any of the preceding claims further including
a second isolator (19) providing communication from a third point (23) to a fourth point (11), said third (23) and fourth (11) points being on opposite sides of said isolator (19), said third and fourth points defining an optic axis through said second isolator (19), said isolator substantially attenuating communication from said fourth point (11) to said third point (23);
said first fiber (45) having a second end (23) positioned at said third point;
a third light source (5) positioned on the same side of said second isolator as said fourth point (11) and away from said optic axis whereby light emanating from said third light (5) source traverses said second isolator (19) and enters said first fiber (23).

6. The system of claim 5 further including a second fiber (6) positioned on the same side of said second isolator (19) as said third light source (15) and away from said optic axis, said second fiber (6) being connected to a pump, and at least a portion of said second fiber being erbium doped.

7. The system of claim 6 further including a light source (101) positioned on the same side of said first isolator (21) as said receiving means and away from said optic axis, said light source (101) being connected to a pump.
